# EUROPEAN PATENT APPLICATION

(11) **EP 4 783 135 A1**
(43) Date of publication of application: **29.07.2026**
(21) Application number: 26153136.2
(22) Date of filing: 21.01.2026
(51) Int. Cl.: G07C 5/00, G07C 5/08, H04W 4/44, H04W 72/02

(54) **CONSOLIDATED VEHICLE DATA ANALYSIS VIA WIRELESS NETWORK SLICING**

(30) Priority: 23.01.2025 US 202519035107
(71) Applicant: T-Mobile Innovations LLC, Bellevue, WA 98006 (US)
(72) Inventor: LEE, Do Kyu, Bellevue, 98006 (US)
(74) Representative: Suddaby, Mark Edward

(57) **Abstract**

Systems, methods, and devices are disclosed for collecting and analyzing vehicle diagnostic data using network slicing technology. In accordance with some embodiments, a method includes monitoring communication signals from at least one internal vehicle communication protocol to collect data from a plurality of subsystems of a motor vehicle. The method further includes processing the data from the plurality of subsystems to consolidate the data into one or more datasets for transmission to a remote server and identifying a priority level for each dataset of the one or more datasets based on predefined criteria to determine to transmit at least one dataset to the remote server. The method further includes transmitting each of the at least one dataset from the motor vehicle to the remote server via a network slice of a wireless communication network based at least on the priority level of each of the at least one dataset.

## Description

### TECHNICAL FIELD

Various embodiments of the present technology relate to wireless communication networks and in particular to improved vehicle data collection and analysis.

### BACKGROUND

The advent of Fifth Generation (5G) technology marks a transformative leap in telecommunications, offering unparalleled speed, low latency, and support for massive device connectivity. Unlike its predecessors, 5G employs a software-defined architecture that allows for dynamic resource management, enabling unprecedented flexibility and scalability in network operations. Central to this adaptability is network slicing, a feature that partitions a single physical 5G network into multiple virtual networks, or slices, each optimized for specific performance requirements such as ultra-low latency, high bandwidth, or massive device support.

Network slicing allows for the creation of isolated virtual networks tailored to meet the needs of diverse applications. For instance, ultra-reliable low-latency communication (URLLC) slices can support mission-critical systems like autonomous driving, while enhanced mobile broadband (eMBB) slices cater to high-bandwidth applications like streaming and augmented reality. By dynamically allocating resources, network slicing ensures that high-priority applications receive dedicated bandwidth without interference from other network traffic.

Modem vehicles are equipped with advanced systems that collect and process a wide range of data to enhance performance, safety, and user experience. This data is generated by various sensors and modules embedded within the vehicle, including the engine control unit (ECU), transmission system, braking system, and advanced driver-assistance systems (ADAS). Collected data may include diagnostic trouble codes (DTCs), real-time performance metrics such as speed, RPM, and fuel efficiency, as well as environmental data like external temperature and road conditions. Vehicle data is typically accessed through standardized interfaces such as the On-Board Diagnostics (OBD-II) port, which provides a gateway to the vehicle's communication networks, including the Controller Area Network (CAN) Bus. These systems rely on proprietary and standardized protocols to transmit and organize information, enabling vehicle manufacturers, service centers, and sometimes end-users to diagnose issues, perform maintenance, and optimize vehicle operations. However, the process is often fragmented, with data stored locally or transmitted periodically, limiting its potential for real-time analysis and integration with external systems.

It is with respect to this general technical environment that aspects of the present technology disclosed herein have been contemplated. Furthermore, although a general environment has been discussed, it should be understood that the examples described herein should not be limited to the general environment identified in the background.

### BRIEF SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Various embodiments of the present technology generally relate to systems and methods for collecting and analyzing vehicle diagnostic data using cellular network and network slicing technology. In a first embodiment, a method includes monitoring communication signals from at least one internal vehicle communication protocol to collect data from a plurality of subsystems of a motor vehicle. The method further includes processing the data from the plurality of subsystems to consolidate the data into one or more datasets for transmission to a remote server and identifying a priority level for each dataset of the one or more datasets based on predefined criteria to determine to transmit at least one dataset of the one or more datasets to the remote server. The method further includes transmitting each of the at least one dataset from the motor vehicle to the remote server via a network slice of multiple network slices of a wireless communication network based at least on the priority level of each of the at least one dataset.

In some implementations of the method, the data from the plurality of subsystems includes at least one of the following: sensor readings, diagnostic trouble codes, driver behavior metrics, environmental data, and component usage statistics. In some implementations of the method, the at least one internal vehicle communication protocol includes at least one of a CAN bus, OBD-II, and UDS. The method further includes, in some examples, to determine to transmit the at least one dataset of the one or more datasets to the remote server, comparing each dataset of the one or more datasets to at least one trigger point, the at least one trigger point comprising at least one of a size threshold and an available network connection. The predefined criteria, in some examples, are configured to assign the priority level for each dataset of the one or more datasets based at least in part on whether data in each dataset is urgent data or non-urgent data. In some examples, the method further includes selecting a network slice of the wireless communication network over which to transmit the at least one dataset. The method may further include receiving feedback from the remote server based on a server-side analysis of the at least one dataset, wherein the feedback includes a maintenance alert or an operational recommendation. The remote server, to perform the server-side analysis in some examples, applies one or more machine learning models to the at least one dataset. In some examples, at least one non-urgent dataset is stored locally on the motor vehicle for future transmission to the remote server.

In an alternative embodiment of the present technology, one or more non-transitory computer-readable storage media have program instructions stored thereon that, when executed by a computing system, direct the computing system to perform operations. The operations include monitoring communication signals from at least one internal vehicle communication protocol to collect data from a plurality of subsystems of a motor vehicle and processing the data from the plurality of subsystems to consolidate the data into one or more datasets for transmission to a remote server. The operations further include identifying a priority level for each dataset of the one or more datasets based on predefined criteria to determine to transmit at least one dataset of the one or more datasets to the remote server and transmitting each of the at least one dataset from the motor vehicle to the remote server via a network slice of multiple network slices of a wireless communication network based at least on the priority level of each of the at least one dataset.

In yet another embodiment, a system includes one or more computer-readable storage media, a processing system operatively coupled with the one or more computer-readable storage media, and program instructions stored on the one or more computer-readable storage media. The program instructions, when read and executed by the processing system, direct the processing system to at least monitor communication signals from at least one internal vehicle communication protocol to collect data from a plurality of subsystems of a motor vehicle and process the data from the plurality of subsystems to consolidate the data into one or more datasets for transmission to a remote server. The program instructions further direct the processing system to identify a priority level for each dataset of the one or more datasets based on predefined criteria to determine to transmit at least one dataset of the one or more datasets to the remote server and transmit each of the at least one dataset from the motor vehicle to the remote server via a network slice of multiple network slices of a wireless communication network based at least on the priority level of each of the at least one dataset.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an overview of consolidated vehicle data analysis in accordance with some embodiments of the present technology;
Figure 2 illustrates an example of consolidated vehicle data analysis in accordance with some embodiments of the present technology;
Figure 3 illustrates an example of a consolidated vehicle data analysis system in accordance with some embodiments of the present technology;
Figure 4 is a first flowchart illustrating a series of steps performed in a vehicle in accordance with some embodiments of the present technology;
Figure 5 is a second flowchart illustrating a series of steps performed in a vehicle data analysis system in accordance with some embodiments of the present technology;
Figure 6 illustrates a 5G standalone architecture in which embodiments of the present technology may be implemented; and
Figure 7 illustrates a computing system suitable for implementing the various operational environments, architectures, processes, scenarios, and sequences discussed below with respect to the other Figures.

### DETAILED DESCRIPTION

The present technology includes systems and methods for collecting and analyzing vehicle diagnostic data in real-time using cellular network and network slicing technology. The system disclosed herein addresses limitations of current vehicle diagnostics, which rely on static data collection methods like OBD-II dongles, manual service records, and/or limited app-based solutions.

The recent widespread adoption of advanced broadband communication technology (e.g., 5G) brings transformative potential for vehicle data collection and analysis due to its high-speed, low-latency capabilities and ability to support massive data throughput. Unlike prior network generations, advanced communication networks are engineered to handle the data-intensive needs of technology, including modem vehicles, enabling more effective management of large volumes of information generated in real time. This advancement could be particularly impactful in the automotive industry where timely data processing is essential, such as in advanced driver assistance systems (ADAS) and remote diagnostics.

A key feature of certain communication networks (e.g., 5G, 6G, etc.) that enhances their applicability to vehicle data is network slicing. Network slicing allows a single physical network to be divided into multiple virtual networks, each optimized for specific requirements, such as ultra-low latency for safety-critical applications or high-reliability channels for vehicle health monitoring. This customization provides distinct data pathways tailored to the needs of each automotive function, allowing simultaneous, efficient handling of diverse data types from a single vehicle or across an entire fleet.

Some modem vehicles continuously collect and transmit data from numerous sensors, tracking metrics like engine performance, brake efficiency, fuel usage, tire pressure, and driver behavior. With network slicing, this data can be prioritized, processed, and analyzed in real time, enhancing the effectiveness of applications ranging from predictive maintenance to autonomous driving. By enabling a faster, more reliable data infrastructure, modern communication networks and network slicing offer an efficient solution to the evolving demands of vehicle data collection and analysis, supporting more responsive and safe automotive technologies.

Thus, in accordance with the present disclosure, a wide range of dynamic vehicle data is collected on-board, including information from various internal protocols (CAN, UDS, J1939, etc.), sensor readings, driving patterns, user behavior, and the like. The data is collected through an on-board SDK and application and transmitted to a central database via a cellular network, allowing for real-time analysis and the generation of actionable insights. Network slicing is leveraged to prioritize the transmission of critical data, ensuring efficient and reliable communication between the vehicle and the server.

The systems and methods disclosed herein have beneficial applications in both business-to-business and business-to-customer scenarios. Examples of such scenarios include: inventory management for manufacturers (i.e., providing manufacturers with real-time data on vehicle performance and part usage to optimize inventory management and production planning); personalized user insights (i.e., offering users personalized insights into their driving habits, vehicle health, and maintenance needs to improve driver safety and vehicle longevity); insurance applications (i.e., personalized insurance offerings based on driving patterns to promote safe driving practices); and emergency services (i.e., prioritizing critical data transmission via network slicing to facilitate faster response times).

Various technical effects may be appreciated from the implementations disclosed herein. Such technical effects include the reduced computational overhead and complexity typically associated with handling multiple proprietary systems. The use of network slicing optimized bandwidth allocation and provides low-latency transmission for high-priority data, such as safety-critical diagnostics, while deferring less urgent data to lower-priority slices. This dynamic prioritization not only enhances the efficiency of data transmission but also reduces network congestion. Furthermore, the systems' real-time data processing enables immediate insights and predictive analytics, minimizing the need for manual diagnostics and improving operational efficiency for both vehicle users and manufacturers. Dynamic adjustment of data collection and transmission thresholds also conserves processing resources and network bandwidth, providing scalability for large-scale deployment across diverse vehicle types.

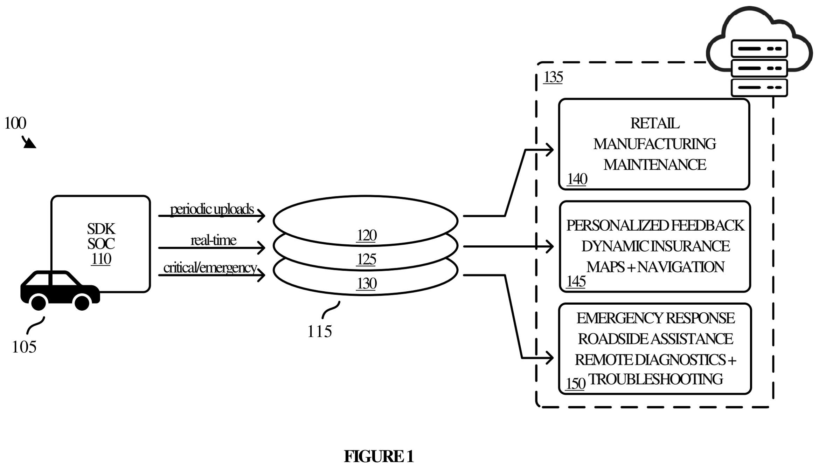

Figure 1 illustrates vehicle data environment 100. Vehicle data environment 100 includes Software Development Kit (SDK) System-on-a-Chip (SOC) 110, network 115, and analytics platform 135. SDK SOC 110 is installed on vehicle 105. Network 115 includes network slice 120, network slice 125, and network slice 130. Analytics platform 135 includes analytics server 140, analytics server 145, and analytics server 150. The elements shown in Figure 1 are merely for purposes of example, and vehicle data environment 100 may include additional, fewer, or different elements than those illustrated in the example of Figure 1.

In accordance with the present example, vehicle 105 is representative of a motor vehicle (e.g., passenger car, truck, van, commercial vehicle, bus, specialized vehicle, motorcycle, off-road vehicle) equipped with at least one computing system for monitoring, processing, and transmitting data generated on vehicle 105 (e.g., SDK SOC 110). SDK SOC 110 acts as a hub for collecting, processing, and transmitting data from the internal systems of vehicle 105 to one or more external platforms. SDK SOC 110 interfaces with a variety of internal vehicle communication protocols that may include but is not limited to the Controller Area Network (CAN) Bus, On-Board Diagnostics II (OBD-II), Unified Diagnostic Services (UDS), CAN Calibration Protocol (CAN), Universal Measurement and Calibration Protocol (XCP), J1939 protocol, and others. These protocols are used to retrieve data from various electronic control units (ECUs) embedded in vehicle 105, such as the engine control unit, braking system, airbag module, infotainment systems, and the like. SDK SOC 110 consolidates the data obtained from these disparate systems into one or more unified formats for further processing and transmission, thereby reducing the complexity associated with handling multiple proprietary data formats.

SDK SOC 110 dynamically manages data prioritization based on predefined criteria, such as urgency, data type, and operational requirements. For instance, safety-critical data, such as airbag deployment or brake system alerts, may be identified as high-priority and transmitted immediately to external systems via a cellular communication network. This transmission leverages network slicing, which enables dedicated virtual network slices optimized for low-latency, high reliability communication. In the example of Figure 1, such high-priority data is transmitted over network slice 130 of network 115 to at least analytics server 150. Simultaneously, less critical data, such as fuel consumption trends or aggregated maintenance records, is stored in queued for period uploads to conserve network resources and reduce congestion.

SDK SOC 110 is connected to external cloud-based platforms (e.g., analytics platform 135). These platforms handle further processing and analysis of the transmitted data. For example, real-time data from SDK SOC 110 may be processed for predictive maintenance models for forecasting the remaining lifespan of components of vehicle 105, such as brake pads or engine oil. Similarly, driving behavior data ca be used for insurance risk assessments or driver feedback applications. Aggregated vehicle health data may inform manufacturers' inventory management systems by predicting demand for parts.

SDK SOC 110 further facilitates communication with user-facing applications, either through a mobile app or an in-vehicle interface. These applications provide vehicle users with access to real-time diagnostics, maintenance alerts, navigation updates, performance metrics, and the like. SDK SOC 110 serves as the intermediary that collects and processes the raw data from vehicle 105 and makes it accessible to these external systems and applications.

SDK SOC 110 integrates hardware components such as one or more processors, memory units, and communication interfaces, which enable its operations as a stand-alone processing unit within vehicle 105. SDK SOC 110 is designed to support multiple configurations and vehicle types, making it adaptable for use in passenger vehicles, commercial trucks, buses, off-road vehicles, and other specialized applications. The SOC is connected to communication systems of vehicle 105, including the CAN Bus, OBD-II port, and other protocol-specific interfaces, providing compatibility with various manufacturers' systems and standards.

In addition to its internal role, SDK SOC 110 is responsible for managing external communication through at least network 115. This includes transmitting data over wireless connections using secure protocols and optimizing transmission based on network conditions. For example, SDK SOC 110 may employ retry logic and/or compression algorithms to ensure data is successfully delivered, even under challenging network conditions. The system also monitors the health of communication links and adjusts its behavior to maintain reliability and efficiency.

While SDK SOC 110 is depicted as a single device or component in Figure 1, its functionality may be distributed across multiple physical or virtual devices in other examples. For instance, the SDK and application layer may operate independently, with the SDK handling data collection and initial processing within vehicle 105 and the application layer managing higher-level analytics, user-facing interactions, and/or external server communication.

Network 115 is representative of a wireless communication network (e.g., 5G network) that facilitates data transmission between SDK SOC 110 within vehicle 105 and external systems, including analytics platform 135. Network 115 provides a high-bandwidth, low-latency communication infrastructure designed to support real-time and data-intensive applications. Network 115 enables connectivity for transmitting data collected by SDK SOC 11, allowing for continuous or period uploads depending on the priority and type of data. Network 115's architecture may support advanced communication features, such as massive device connectivity and high reliability to assist modem vehicle systems requiring dynamic and scalable data exchange.

Within network 115, network slice 120, network slice 125, and network slice 130 represent examples of virtualized, logically independent segments of the wireless communication network, each tailored to meet specific performance requirements. Network slice 130 is optimized for transmitting high-priority, time-sensitive data, such as safety-critical alerts and/or real-time diagnostics, providing ultra-low latency and high reliability. Network slice 125 handles medium-priority data, such as predictive maintenance updates or dynamic navigation information, which may require moderate latency and bandwidth. Network slice 120 is configured for low-priority, non-urgent data, such as aggregated vehicle statistics or period updates, where latency and bandwidth requirements are less stringent. These network slices and/or other network slices operate simultaneously within the shared infrastructure of network 115, allocating resources based on the type and priority of the data being transmitted from SDK SOC 110.

The use of network slicing in network 115 enables efficient management of bandwidth and helps to ensure that critical data streams are not delayed or disrupted by lower-priority communications. Each slice operates independently, using predefined quality-of-service (QoS) parameters to meet the specific needs of the data types it handles. This architecture allows network 115 to dynamically allocate resources and adapt to changing conditions, such as variations in network traffic or connectivity. By providing dedicated paths for different types of data, the network can provide reliable and efficient communication between vehicle 105 and the various external systems with which data is shared.

While network 115 is depicted in Figure 1 with three slices-network slice 120, network slice 125, and network slice 130-this configuration is merely one example. Network 115 may include a different number of slices or utilize alternative slicing strategies depending on the specific application requirements, data priorities, and/or network capabilities. Additional slices could be implemented to handle other types of data or functionalities, and certain slices may be combined or dynamically reconfigured to optimize network resource utilization and performance. The depiction in Figure 1 is thus illustrative and not intended to limit the scope of the network slicing configurations that may be employed.

Analytics platform 135 is a cloud-based platform specifically designed to handle distinct types of vehicle data transmitted via network 115. The servers of analytics platform 135 employ a combination of hardware and software components optimized for data ingestion, analysis, storage, and dissemination. Analytics server 140, analytics server 145, and analytics server 150 are part of a scalable and secure cloud environment, enabling efficient processing and management of data transmitted from vehicle 105 via network 115.

Analytics server 140 is configured to manage low-priority data that may be transmitted via periodic data uploads over network 115. Such low-priority data may consist of aggregated metrics related to retail, manufacturing, and maintenance operations, as just a few examples. Analytics server 140 is configured to handle large-scale datasets aggregated over time from vehicle 105, enabling broad trend analysis and long-term insights.

For retail applications, analytics server 140 processes vehicle usage data, such as driver preferences, feature utilization, and operational history, to support personalized marketing strategies. One or more machine learning models may be employed to identify patterns and predict customer behavior, enabling manufacturers or service providers to offer tailored promotions or service packages. For example, based on driving habits and mileage, the system might recommend a premium maintenance plan or offer incentives for accessory upgrades.

In manufacturing, analytics server 140 analyzes component-level usage data and performance metrics to optimize production schedules, streamline supply chain operations, predict demand for replacement parts, or the like. Machine learning techniques, such as clustering and anomaly detection, may be employed to identify patterns of early component failure or unusual usage trends across a fleet of vehicles. These insights can help manufacturers proactively address design issues, enhance product quality, and reduce warranty costs.

For maintenance planning, analytics server 140 processes aggregated vehicle health data, including diagnostic codes, wear metrics, and operational conditions, to generate predictive maintenance schedules. Analytics server 140 may employ one or more machine learning models trained on historical data to estimate the remaining lifespan of critical components, such as brake pads, tires, or batteries. These predictions enable manufacturers and/or service providers to forecast maintenance needs accurately, ensuring the availability of replacement parts and minimizing vehicle downtime.

Analytics server 140 may operate using one or more distributed storage systems to handle the large datasets associated with the periodic uploads. Batch processing frameworks may be used to analyze data at scale. Analytics server 140, in some examples, also integrates with APIs to share insights with external systems, such as inventory management platforms or customer relationship management (CRM) tools.

Analytics server 145 is configured to manage real-time and/or medium-priority data transmitted via network 115. Analytics server 145 may perform functions related to personalized feedback, dynamic insurance, maps and navigation, and the like. Analytics server 145 may be equipped to handle continuous data streams generated by vehicle 105, such as driving behavior metrics, vehicle status updates, and real-time location data. To handle continuous data streams, analytics server 145 may employ real-time data pipelines and analytics frameworks to process these inputs efficiently and generate actionable insights. APIs and integration frameworks may be employed to enable communication with mobile apps, in-vehicle systems, and other external platforms, allowing for real-time delivery of insights to end users.

In some examples, to deliver personalized feedback, analytics server 145 uses one or more machine learning models trained on historical driving data to evaluate driving behaviors such as acceleration, braking, and cornering patterns. These models may be applied in real time to provide feedback to drivers aimed at improving fuel efficiency, enhancing safety, and/or reducing vehicle wear. For example, the system may notify the driver of consistent hard braking patterns and suggest modifications to improve brake longevity or optimize energy consumption in electric vehicles.

In the context of dynamic insurance, analytics server 145 processes real-time data streams to adjust insurance premiums or assess risk dynamically. Machine learning algorithms may evaluate driving patterns, environmental conditions, and vehicle performance to identify potential risk factors. For instance, a driver's insurance rate may be adjusted based on metrics such as speeding frequency, harsh turns, or weather conditions. Predictive models can also estimate the likelihood of future claims based on current driving behaviors, enabling insurers to provide tailored policies in near real-time.

For maps and navigation, analytics server 145 integrates real-time location data from vehicle 105 with external sources such as traffic updates, road conditions, and weather reports. One or more machine learning models may be employed to predict optimal routes based on current and historical traffic patterns. For example, the server may analyze congestion trends and recommend alternative routes to minimize travel time or fuel consumption. The server may also process geospatial data to deliver location-based services, such as recommending nearby charging stations for electric vehicles or identifying points of interest relevant to the driver.

Analytics server 150 processes high-priority, critical, and emergency data transmitted via network slice 130. Some primary applications of analytics server 150 include supporting emergency response, roadside assistance, and remote vehicle diagnostics and troubleshooting. Analytics server 150 is configured to handle time-sensitive data streams from vehicle 105, ensuring rapid analysis and response to urgent situations.

For emergency response, analytics server 150 processes alerts triggered by events such as airbag deployment, engine failures, or other safety-critical incidents. Upon receiving such data, analytics server 150 may use predefined rules and/or machine learning to assess the situation and determine the appropriate response. For instance, the server may notify emergency services of an accident, providing detailed information about vehicle 105's location, condition, and relevant telemetry data to facilitate a swift and informed response.

In the context of roadside assistance, analytics server 150 analyzes real-time diagnostics and sensor data to identify issues that may require immediate attention. For example, if vehicle 105 reports a flat tire or low battery charge, analytics server 150 may verify the condition, generate troubleshooting instructions, and/or coordinate assistance by dispatching a service vehicle equipped with the required tools or parts. One or more machine learning models on analytics server 150 may also be used to predict the likelihood of related issues, offering proactive solutions to prevent further complications.

For remote vehicle diagnostics and troubleshooting, analytics server 150 processes subsystem-level data to pinpoint faults and recommend corrective actions. Analytics server 150 uses diagnostic trouble codes (DTCs), CAN Bus data, and other inputs to run fault-detection algorithms or one or more machine learning models trained on historical failure data. These models can help identify root causes, recommend repair procedures, and estimate the time or cost required for resolution. Analytics server 150 can also communicate directly with technicians or vehicle users, providing actionable insights to expedite repairs.

Similar to analytics server 140 and analytics server 145, analytics server 150 may employ real-time data processing frameworks to analyze incoming high-priority data with minimal latency. High-availability architectures, including server clusters and failover mechanisms, may help ensure continuous operation under demanding conditions. Secure communication protocols, such as TLS 1.3, may be used to maintain the integrity and confidentiality of the data transmitted over network 115 to analytics platform 135. Analytics server 150 further integrates with external platforms, such as emergency response systems or roadside service providers, through APIs to facilitate coordinated actions.

Analytics server 140, analytics server 145, and analytics server 150 may share common technical attributes that support their functionality. For example, the servers may utilize elastic resource allocation mechanisms to handle varying workloads, scaling computational and storage resources as needed. These servers may employ encryption for data at rest and in transit, as well as access controls to ensure data privacy and integrity. Additionally, each server supports data exchange with external systems via standardized APIs, enabling interoperability within broader ecosystems, such as manufacturer platforms, service centers, or third-party applications.

Although analytics server 140, analytics server 145, and analytics server 150 are depicted as distinct entities in Figure 1, their specific roles and configurations may vary depending on the implementation. For example, functionalities may be implemented on a shared physical server using virtualization or containerization to isolate tasks, or they may be distributed across multiple servers for enhanced scalability, fault tolerance, or geographic redundancy. Furthermore, the division of roles illustrated in Figure 1 is exemplary and not limiting; additional roles, functions, or server configurations could be implemented to meet different or evolving data analytics requirements. This modular architecture allows for flexible deployment and customization of the system to suit a wide range of applications and operational environments.

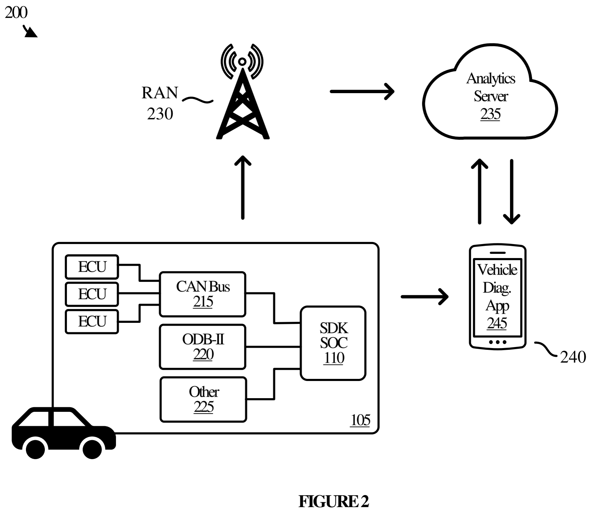

Figure 2 illustrates vehicle data environment 200. Vehicle data environment 200 includes vehicle 105, radio access network (RAN) 230, analytics server 235, and mobile device 240. Vehicle 105 includes SDK SOC 110, CAN Bus 215, OBD-II 220, and other systems 225. CAN Bus is connected to a plurality of ECUs. Mobile device 240 includes vehicle diagnostics application 245. The elements shown in Figure 2 are merely for purposes of example, and vehicle data environment 200 may include additional, fewer, or different elements than those illustrated in the example of Figure 2.

CAN Bus 215 is an internal communication network connected SDK SOC 110 to multiple ECUs within vehicle 105. CAN Bus 215 is a communication protocol that facilitates real-time data exchange between various subsystems of vehicle 105. As a multi-master serial communication protocol, CAN Bus 215 allows multiples ECUs to communicate without a central controller. Each ECU is connected to the CAN Bus and transmits messages using a standardized, message-based protocol. Messages are broadcast to all or some other nodes on the network, but each ECU processes only the messages relevant to its operation.

Data transmitted over CAN Bus 215 includes diagnostic trouble codes (DTCs), real-time sensor data such as engine RPM, vehicle speed, fuel levels, and temperature readings, as well as subsystem control data for components like braking systems, power steering, and electronic stability control. The information is collected by SDK SOC 110, which consolidates and/or processes it for transmission or various internal applications like real-time diagnostics, predictive maintenance, and user-facing features. CAN Bus 215 follows industry standards, such as CAN 2.0A/B, which supports 11-bit or 29-bit message identifiers, and CAN FD (Flexible Data Rate), which enables faster transmission rates and larger data payloads for data-intensive applications. Additionally, CAN Bus 215 may be configured to comply with ISO standards, such as ISO 15765-4, a CAN-based protocol used for OBD-II diagnostics and emissions monitoring.

In some examples, CAN Bus 215 incorporates features such as error detection through cyclic redundancy checks (CRCs) and fault confinement mechanisms. Nodes with persistent errors are isolated from the network to maintain uninterrupted communication between functional nodes.

CAN Bus 215 interfaces with SDK SOC 110, such as through a CAN controller and transceiver, where the CAN controller manages message framing and protocol handling, and the transceiver converts differential CAN signals on the bus into digital signals for SDK SOC 110. This connection enables SDK SOC 110 to monitor and collect data from the connected ECUs. Thus, the integration of CAN Bus 215 with SDK SOC 110 supports a variety of applications, including real-time vehicle monitoring, predictive maintenance, enhanced diagnostics, and user-focused features such as driving behavior feedback and/or insurance-related data sharing.

OBD-II 220 is another connection point between SDK SOC 110 and the diagnostic systems of vehicle 105, providing access to standardized data streams from various ECUs. OBD-II 220 is both a physical interface (e.g., a 16-pin diagnostic connector typically location beneath the dashboard of the vehicle) and a standardized protocol system used for monitoring and reporting vehicle performance and diagnostic information. Through this connection, SDK SOC 110 can retrieve DTCs, real-time sensor readings, and subsystem status updates, which can assist in fault detection, emissions monitoring, and predictive maintenance.

OBD-II 220 may use a variety of standardized (or non-standardized) communication protocols, including but not limited to SAE J1850 PWM and VPW, ISO 9141-2, ISO 14230 (Keyword Protocol 200), and ISO 15765-4 (CAN). The specific protocol utilized depends on the vehicle manufacturer and model year. The standardization allows SDK SOC 110 to interface seamlessly with a wide range of vehicle makes and models, consolidating diagnostic data for analysis and external transmission.

The data available through OBD-II 220 may include engine parameters such as revolutions per minute (RPM), vehicle speed, fuel system status, and oxygen sensor readings, as well as emissions-related metrics like catalytic converter efficiency and evaporative emissions systems status. Additionally, OBD-II 220 provides access to manufacturer-specific DTCs that identify faults within specific subsystems, enabling detailed diagnostics. SDK SOC 110 leverages this data for real-time processing and integration with advanced analytics, contributing to applications such as dynamic maintenance scheduling, remote diagnostics, and user feedback on driving behaviors.

Other systems 225 is broadly representative of additional internal vehicle systems and communication protocols that may interface with SDK SOC 110 to facilitate the collection of vehicle-related information. Other systems 225 encompasses a variety of specialized networks and protocols beyond those provided by CAN Bus 215 and OBD-II 220, enabling SDK SOC 110 to access a broader range of data for diagnostics, performance monitoring, and analytics.

Other systems 225 may include but is not limited to protocols such as Unified Diagnostic Services (UDS, ISO 14229), which is widely used for advanced diagnostics, ECU programming, and firmware updates. Other systems 225 may also include CCP and XCP for real-time parameter measurement and ECU calibration, higher-layer protocols like CANopen for embedded control applications, J1939 for standardized communication in heavy-duty vehicles, and NMEA-2000 for data integration in maritime applications. Moreover, protocols like ISOBUS (ISO 11783) may enable plug-and-play functionality for agricultural or forestry machinery while LIN (Local Interconnect Network) may provide communication for non-critical vehicle functions such as lighting and climate control.

Other systems 225 allows SDK SOC 110 to collect a wide range of data, including real-time subsystem performance metrics, sensor readings, user control inputs, and DTCs. For example, J1939 and UDS can provide access to in-depth diagnostics for commercial and passenger vehicles, while LIN and CANopen can contribute data from auxiliary systems and/or in industrial vehicles.

In certain scenarios, SDK SOC 110 of vehicle 105 connects to RAN 230. RAN 230 facilitates wireless connectivity between vehicle 105 and external systems, including analytics server 235 and vehicle diagnostics application 245. RAN 230 enables data collected by SDK SOC 110 to be transmitted wirelessly over one or more wireless communication networks, such as 5G, 6G, LTE, or other radio access technologies. RAN 230 supports the transfer of various types of data, including DTCs, real-time performance metrics, and aggregated maintenance logs, providing communication between vehicle 105 and the external platforms. RAN 230, in some implementations, is an example network 115 from Figure 1.

RAN 230 may be implemented using different radio access technologies based on the network infrastructure and application requirements. In a 5G network, for example, RAN 230 may include components such as gNodeBs (gNBs) to support low-latency, high-bandwidth communication. In a Long-Term Evolution (LTE) network, RAN 230 may include eNodeBs to support robust data transfer. Hybrid configurations incorporating Wireless Fidelity (Wi-Fi) or satellite communication may also be supported in some cases.

The connection between vehicle 105 and analytics server 235 allows for the processing and analysis of transmitted data to be used by the analytics server to support various applications such as inventory management, trend analysis, and others. Via RAN 230, vehicle 104 is linked to vehicle diagnostics application 245, enabling users to access diagnostic data, maintenance schedules, performance insights and the like via mobile devices or in-vehicle interfaces. Through advanced network features like dynamic spectrum allocation and QoS management, RAN 230 allows for prioritized and optimized data transmission based on urgency and data type. Secure communication protocols further protect the integrity and confidentiality of data transmitted through the network.

RAN 230, in certain examples, uses network slicing to optimize the transmission of data based on its type and priority. Network slicing allows the creation of virtual, independent segments within the same physical network infrastructure, each tailored to specific performance requirements. For example, a low-latency, high-reliability slice can be allocated for transmitting critical and emergency data, such as safety alerts or fault notifications, ensuring minimal delay in communication. Meanwhile, real-time diagnostic data or personalized user feedback can utilize slices optimized for moderate latency and bandwidth. Bulk data uploads, such as periodic maintenance logs or aggregated performance metrics, are transmitted over bandwidth-efficient slices designed for non-urgent communication.

In an alternative configuration depicted in Figure 2, SDK SOC 110 may upload data directly to mobile device 240 rather than first transmitting it to analytics server 235 via RAN 230. This upload, in some examples, may occur through local communication protocols such as Bluetooth, Wi-Fi, or another short-range wireless technology, enabling SDK SOC 110 to transmit consolidated datasets to mobile device 240 for further handling. Vehicle diagnostics application 245, operating on mobile device 240, may then upload the received data to analytics server 235 using a network connection, such as cellular data (e.g., RAN 230) or Wi-Fi. This alternative configuration allows for a flexible architecture in which mobile device 240 serves as an intermediary, enabling data transmission even when direct connectivity between SDK SOC 110 and analytics server 235 is unavailable or impractical. Additionally, this setup can facilitate local processing or user access to vehicle data on mobile device 240 before further analysis on analytics server 235.

In Figure 2, analytics server 235 is responsible for processing, analyzing, and managing data transmitted from vehicle 105 via RAN 230 and/or mobile device 240. Analytics server 235 is not limited to a single physical server but may comprise a distributed system of interconnected servers optimized for specific tasks, like in the example of Figure 1. Alternatively, analytics server 235 may be implemented as a single server, depending on the specific implementation of the technology. Analytics server 235 may be virtualized or containerized within a cloud environment, allowing for scalability, resource optimization, and fault tolerance. By leveraging a distributed architecture, analytics server 235 can efficiently handle the diverse and high-volume data streams generated by multiple vehicles simultaneously.

Analytics server 235 may be functionally divided into different types of servers based on the roles described in Figure 1, such as those dedicated to real-time analytics, periodic data uploads, and critical data processing. For example, one subset of servers might handle real-time data streams for applications like navigation updates or dynamic insurance adjustments, while another subset focuses on analyzing periodic data uploads for maintenance planning or manufacturing insights. Additionally, dedicated high-reliability servers may be tasked with processing critical and emergency data, ensuring rapid response to events such as system failures or safety incidents. This modular design enables analytics server 235 to allocate resources efficiently based on data type and priority, ensuring optimal performance and reliability. Secure communication protocols and advanced processing frameworks further enhance the system's capability to integrate with external applications, such as vehicle diagnostics tools or manufacturer dashboards.

Vehicle diagnostics application 245 represents an application layer interface that provides access to the data processed by analytics server 235, delivering diagnostic insights and actionable information to end users and/or system administrators. Vehicle diagnostics application 245 may reside on various devices, including mobile devices, desktop computers, or in-vehicle infotainment systems. Vehicle diagnostics application 245 serves as one medium for interpreting and interacting with the diagnostic and performance data generated by vehicle 105, enabling functionalities such as real-time monitoring, fault detection, and predictive maintenance scheduling.

Vehicle diagnostics application 245 receives processed data from analytics server 235 via secure communication protocols and presents this information in a user-friendly format. Depending on its implementation, vehicle diagnostics application 245 may provide features such as live updates on vehicle health, alerts for potential issues, recommendations for maintenance actions, and the like. For example, the application could notify a user of declining brake pad thickness and suggest scheduling a replacement, or it might highlight driving behaviors that negatively impact fuel efficiency. Additionally, the application may serve as a platform for transmitting remote commands to vehicle 105, such as initiating software updates or configuring vehicle settings, depending on the system's capabilities.

Vehicle diagnostics application 245 may also integrate with third-party services and systems to expand its functionality. For instance, in some examples vehicle diagnostics application 245 connects with insurance platforms to provide real-time risk assessments based on driving behaviors or collaborate with navigation systems to dynamically adjust routes based on vehicle performance or maintenance needs. The application may also allow manufacturers or fleet operators to monitor multiple vehicles, enabling fleet-wide analytics and operational optimization. By consolidating diagnostic insights and real-time updates into a single interface, vehicle diagnostics application 245 supports enhanced user engagement and facilitates proactive management of vehicle health and performance. The specific architecture of vehicle diagnostics application 245 may leverage APIs, cloud-based services, and/or machine learning models to provide robust, scalable, and secure operation.

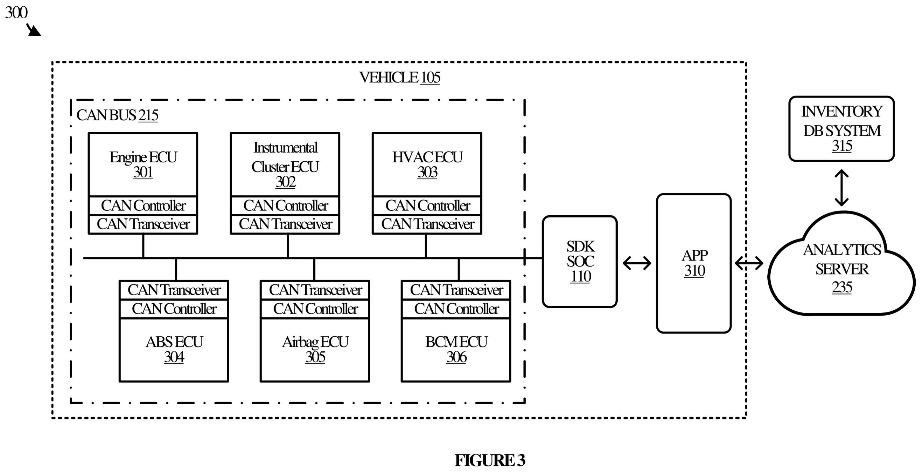

Figure 3 illustrates vehicle data environment 300. Vehicle data environment 300 includes vehicle 105, analytics server 235, and inventory database system 315. Vehicle 105 includes SDK SOC 110, CAN Bus 215, and application layer 310. CAN Bus 215 includes engine ECU 301, instrumental cluster ECU 302, heating, ventilating, and air conditioning (HVAC) ECU 303, ABS ECU 304, Airbag ECU 305, and body control module (BCM) ECU 306. The elements shown in Figure 3 are merely for purposes of example, and vehicle data environment 300 may include additional, fewer, or different elements than those illustrated in the example of Figure 3.

CAN Bus 215 operates as a communication backbone within vehicle 105, enabling data exchange between SDK SOC 110 and multiple ECUs of vehicle 105. Each ECU is equipped with a CAN controller and a CAN transceiver. The CAN controller handles the framing, error detection, and protocol management for CAN messages. The CAN transceiver translates digital signals from the controller into the differential signals required for communication over CAN Bus 215. These ECUs collect and process data from specific subsystems within vehicle 105, providing detailed operational and diagnostic information to SDK SOC 110.

Engine ECU 301 manages data related to engine performance, including parameters such as engine RPM, fuel injection timing, air-to-fuel ratio, and temperature readings. This data helps monitor engine efficiency, diagnose performance issues, and ensure emissions compliance. Instrument cluster ECU 302 provides data on vehicle status visible to the driver, such as speedometer readings, fuel levels, and warning indicators. This data helps monitor vehicle usage patterns and detect anomalies, such as inaccurate readings or unresponsive gauges.

HVAC ECU 303 monitors and controls climate systems, providing information on cabin temperature, blower speed, and compressor activity. This data can be used for energy efficiency analysis, particularly in electric vehicles where HVAC systems significantly impact battery life. ABS ECU 304 monitors the antilock braking system, supplying data on wheel speed sensors, brake fluid pressure, and activation of the ABS during braking events. This information can help identify safety-critical issues and understand driving conditions that may necessitate further analysis.

Airbag ECU 305 manages the deployment of airbags during collisions and collects data on crash severity, impact location, and sensor statuses. This data may be helpful for post-collision diagnostics and enhancing vehicle safety designs. BCM ECU 306 governs various vehicle subsystems, such as lighting, door locks, and window controls. Collecting BCM data enables remote vehicle diagnostics, monitoring of auxiliary systems, and analysis of user interactions with certain vehicle features.

Data collected from these ECUs via CAN Bus 215 is transmitted to SDK SOC 110, where it is consolidated and processed for various applications. For example, engine data from engine ECU 201 may be used for predictive maintenance, enabling the system to schedule service appointments based on performance trends. ABS and airbag data from ABS ECU 304 and Airbag ECU 305 can enhance safety analytics and inform real-time alerts or post-event evaluations. HVAC and BCM data from HVAC ECU 303 and BCM ECU 306 may contribute to energy efficiency models and improve the user experience by optimizing climate control or auxiliary feature usage. By monitoring data produced by these diverse ECUs, SDK SOC 110 is able to provide a comprehensive view of vehicle operation, enabling applications such as fleet management, remote diagnostics, and advanced driver assistance systems (ADAS).

Application layer 310 operates as an intermediary layer between SDK SOC 110 and analytics server 235, managing the preparation and transmission of data collected from vehicle 105. Application layer 310 interfaces with SDK SOC 110 to receive data from various internal systems, such as CAN Bus 215, and organizes this data for efficient and prioritized transmission to external analytics platforms. This layer is responsible for formatting, categorizing, and prioritizing the collected data to ensure that it aligns with the requirements of the analytics server(s) and the overall system objectives.

One function of application layer 310 is the management of data uploads, such as determining the timing and sequence of data transmission based on predefined criteria, such as data type, priority, and urgency. For example, application layer 310 may schedule high-priority safety-critical data, such as fault codes from the airbag ECU or real-time metrics from the ABS ECU, for immediate upload to analytics server 235. Conversely, less urgent data, such as historical HVAC usage patterns or aggregated fuel efficiency metrics, may be deferred for periodic uploads to optimize network usage and avoid congestion.

Application layer 310 also plays a role in the selection of appropriate network slices for data transmission over the wireless communication network facilitated by RAN 230. Using predefined rules or dynamic criteria, application layer 310 assigns data to specific slices based on its priority and transmission requirements. High-reliability, low-latency slices may be allocated for real-time data streams, such as emergency alerts or navigation updates, while bandwidth-efficient slices are used for bulk uploads of maintenance logs or vehicle usage statistics. By managing this slicing selection, application layer 310 enables data transmission to be both efficient and aligned with the system's performance objectives.

In addition to managing data uploads and slicing selection, application layer 310 may perform preprocessing tasks, such as compressing data, encrypting it for secure transmission, or aggregating smaller datasets into larger packets to improve upload efficiency. These operations enhance the overall functionality of the vehicle data system by ensuring that data is transmitted reliably and in a form that facilitates downstream processing and analysis by analytics server 235.

Inventory database system 315 is one example of a repository that utilizes data processed by analytics server 235. In the example of Figure 3, inventory database system 315 is a centralized repository that utilizes data processed by analytics server 235 to support inventory management-related systems. This database system stores and organizes detailed information about vehicle components, their usage patterns, and predicted maintenance needs. By aggregating and analyzing this data, inventory database system 315 facilitates efficient supply chain management and helps manufacturers and service providers maintain optimal stock levels for replacement parts.

Inventory database system 315 integrates data such as wear and usage metrics for components like brake pads, tires, filters, and other consumables. These data points are derived from vehicle diagnostics and performance metrics transmitted to analytics server 235, which processes and refines the data before uploading it to the inventory database. For instance, by correlating real-time mileage, driving conditions, and historical wear patterns, the system can predict when specific parts are likely to require replacement. These predictions allow manufacturers and service centers to adjust inventory levels dynamically, reducing overstock and minimizing delays in servicing.

Inventory database system 315 may also include additional features, such as clustering data by vehicle model, geographic region, or fleet usage patterns, to allow manufacturers to identify trends across their product lines or specific markets, enabling more targeted production and distribution strategies. Inventory database system 315 may also interface with external systems, such as manufacturing supply chain platforms or dealer networks, to automate procurement workflows and optimize resource allocation.

Inventory database system 315 is presented as an example application of the technology disclosed herein, illustrating how processed vehicle data can support inventory management and supply chain optimization. However, the disclosed system is not limited to this application and could be employed in numerous other contexts. For example, the technology disclosed herein could be used for fleet management applications, enabling operators to monitor vehicle performance and optimize maintenance schedules across a fleet. Similarly, the technology disclosed herein may be leveraged to support insurance platforms by providing real-time driving behavior analytics for risk assessment and policy adjustments. These non-limiting examples demonstrate the versatility of the system in addressing diverse data-driven applications.

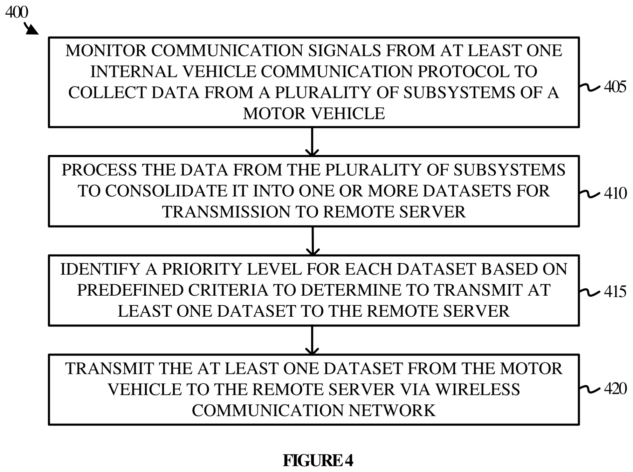

Figure 4 illustrates process 400. Process 400 is an exemplary operation of monitoring, processing, and uploading vehicle data in any of vehicle data environment 100, vehicle data environment 200, and/or vehicle data environment 300. The operations may vary in other examples. The operations of process 400, in some examples, are performed at least in part by an SDK, such as SDK SOC 110 in the preceding Figures.

The operations of process 400 include monitoring communication signals from at least one internal vehicle communication protocol to collect data from a plurality of subsystems of a motor vehicle (step 405). In the example of Figure 2, SDK SOC 110 monitors communication signals from CAN Bus 215, OBD-II 220, and other systems 225 to collect the data from the various subsystems of vehicle 105. In the example of Figure 3, SDK SOC 110 may monitor and collect data from at least CAN Bus 215 before the data is shared with application layer 310 for more advanced data processing.

The operations of process 400 further include processing the data from the plurality of subsystems to consolidate the data into one or more datasets for transmission to a remote server (step 410). Step 410, in some examples, may be performed directly by the SDK that the vehicle is equipped with. In other examples, however, step 410 may be performed by a separate application on the vehicle or an application layer of the SDK. In the example of Figure 1 and Figure 2, the data from the plurality of subsystems on vehicle 105 may be processed directly by SDK SOC 110. In the example of Figure 3, the data from the plurality of subsystems on vehicle 105 may be processed by application layer 310. In some examples, SDK SOC 110 performs some basic organization, initial formatting, or preprocessing, while application layer 310 performs the more extensive processing, organization, and preparation of the data in preparation for transmission and/or further analysis.

Consolidating the data as described in step 410 involves aggregating, organizing, and/or formatting raw information from the various vehicle subsystems into cohesive datasets tailored for specific applications or analysis needs. These datasets may be structured based on factors like data type, priority, or intended use. For example, safety-critical data, such as airbag deployment or braking anomalies, might be grouped into a high-priority dataset for immediate transmission, while aggregated maintenance logs or historical usage patterns could be included in a lower-priority dataset for periodic uploads. Consolidating the data into these datasets enables efficient and organized transmission to remote analytics platforms, such as analytics platform 135, analytics server 235, or the like, where the data can be further analyzed, stored, or integrated into applications like predictive maintenance systems, inventory management platforms, and/or real-time user feedback tools. By breaking up the data into well-defined datasets, the system can optimize bandwidth utilization and ensure that the right information is transmitted to the appropriate server or application in a timely and structured manner.

The operations of process 400 further include identifying a priority level for each dataset based on predefined criteria to determine to transmit at least one dataset to the remote server (step 415). This step may similarly be performed by SDK SOC 110 from the preceding Figures, by application layer 310 from the preceding Figures, or a combination of the two. In the example of Figure 3, application layer 310 identifies a priority level for each dataset into which the data was consolidated in step 410. The identified priority level is used to determine when each dataset should be transmitted to analytics server 235 and/or if any should be sent immediately. In other examples, application layer 310 may skip step 410 and immediately send data according to its priority level in urgent scenarios. Application layer 310 determines in step 415 to send at least one dataset to analytics server 235 based on its identified priority level. In the examples of Figure 1 or Figure 2, SDK SOC 110 may identify the priority level to determine to transmit a dataset to analytics server 140, analytics server 145, analytics server 150, or analytics server 235.

The operations of process 400 further include transmitting the at least one dataset from the motor vehicle to the remote server via a wireless communication network (step 420). In the example of Figure 1, SDK SOC 110 transmits the at least one dataset to at least one of server of analytics platform 135 via one of the network slices of network 115. In the example of Figure 2, SDK SOC 110 transmits the at least one dataset to analytics server 235 via RAN 230, over an identified network slice, in some examples. In the example of Figure 3, application layer 310 transmits the at least one dataset to analytics server 235 via a wireless communication network such as RAN 230 or network 115. Any of analytics server 140, analytics server 145, analytics server 150, and/or analytics server 235 may be representative of the remote server of step 420.

SDK SOC 110 and/or application layer 310, in some examples, use trigger points to determine when to send data by identifying specific conditions or events that prompt the transmission of information to the remote server. Trigger points are predefined criteria, such as thresholds, time intervals, or system events that initiate the decision to prioritize and transmit data. For example, a safety-critical event, such as airbag deployment or a fault in the braking system, could act as an event-based trigger, prompting the immediate upload of high-priority data. Conversely, a periodic trigger may be set for routine uploads of aggregated maintenance logs or usage statistics, ensuring that non-urgent data is transmitted at regular intervals to optimize bandwidth usage.

Trigger points can also be dynamic and context aware. For instance, threshold-based triggers could activate when specific parameters exceed acceptable limits, such as engine temperature surpassing a critical value or battery charge dropping below a predefined level. SDK SOC 110 may monitor these parameters in real time and initiate a data transmission when the trigger point is reached. Application layer 310 may further refine these conditions, combining multiple triggers (e.g., time, thresholds, and/or network connectivity) to optimize transmission schedules. By employing trigger points, the system ensures that critical information is transmitted promptly, while less urgent data is managed efficiently, maintaining the balance between system responsiveness and resource optimization.

In some examples, the vehicle may further receive feedback from the remote server based on the server-side analysis of the transmitted dataset. This feedback may leverage the insights derived from the analyzed data to produce a maintenance alert, an operational recommendation, or the like. A maintenance alert may notify the user or system of impending component wear, such as brake pads nearing the end of their usable life, enabling proactive scheduling of repairs. An operational recommendation may provide guidance to optimize vehicle performance or efficiency, such as adjusting driving habits to improve fuel economy or recommending a specific tire pressure for better handling. This feedback is transmitted back to the vehicle or a user-facing application, facilitating timely actions that improve the vehicle's reliability, safety, and efficiency.

In further examples, process 400 may further include storing at least one dataset (e.g., a non-urgent dataset) produced in step 410 locally on the vehicle for future transmission to the remote server. For example, routine maintenance logs or aggregated performance statistics that do not require immediate action may be temporarily stored within the vehicle's onboard storage system. These datasets can be transmitted later during periods of optimal network availability or at scheduled intervals, allowing for efficient use of network resources while maintaining data integrity.

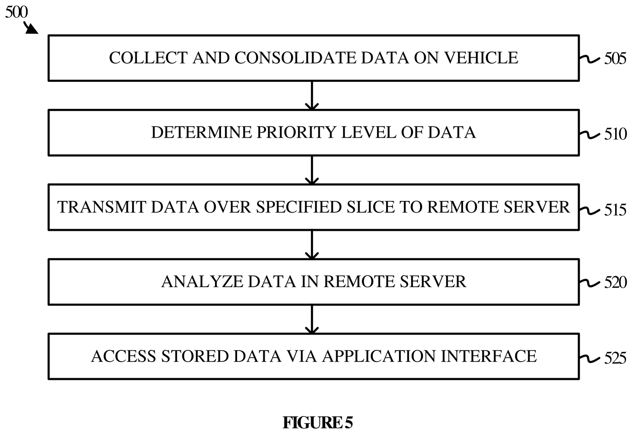

Figure 5 illustrates process 500. Process 500 is an exemplary operation of data consolidation and analysis in accordance with some embodiments of the present technology. The operations may vary in other examples. The operations of process 500, in some examples, are performed at least in part by an SDK (e.g., SDK SOC 110), an application layer (e.g., application layer 310), a wireless communication network (e.g., network 115 and/or RAN 230), one or more analytics servers (e.g., analytics server 140, analytics server 145, analytics server 150, and/or analytics server 235), and one or more remote applications (e.g., vehicle diagnostics application 245 and/or inventory database system 315).

The operations of process 500 include collecting and consolidating data on a vehicle (step 505). In the preceding examples of Figure 1, Figure 2, and/or Figure 3, SDK SOC 110 collects and consolidates the data on vehicle 105. SDK SOC 110 interfaces with various vehicle subsystems, such as ECUs connected via CAN Bus 215, to retrieve raw operational and diagnostic information. This data, which may include metrics like engine performance, braking activity, climate control settings, and the like, is aggregated and organized into a unified format at least in part by SDK SOC 110. Consolidation prepares the disparate data streams from multiple subsystems for further processing and/or transmission to external servers for analysis and application use.

The operations of process 500 further include determining a priority level for the data (step 510). In the examples of the preceding Figures, SDK SOC 110 and/or application layer 310 may perform some or all of step 510. In the example of Figure 3, for example, application layer 310 determines the priority level for the data. Determining the priority level includes evaluating the type, urgency, and intended use of the data to assign it a level of importance. For example, safety-critical data, such as airbag deployment alerts, may be classified as high-priority for immediate transmission, while non-urgent data, such as historical fuel efficiency trends, could be assigned a lower priority for periodic uploads. Priority levels may correspond to specific network slices or transmission protocols optimized for latency, bandwidth, or reliability.

The operations of process 500 further include transmitting the data over a specified network slice to a remote server (step 515). In the examples of the preceding Figures, the data is transmitted over a specified network slice of network 115 and/or RAN 230 to one or more of the remote servers (e.g., analytics server 140, analytics server 145, analytics server 150, and/or analytics server 235). To transmit the data over a specified slice to a remote server, SDK SOC 110 or application layer 310 selects and sends only a portion of the total collected data based on predefined criteria, such as priority level, type, or real-time relevance. To transmit the data, the data may be packetized, encoding it for secure transmission, and routed through the appropriate slice in the wireless communication network.

The operations of process 500 further include analyzing the data in the remote server (step 520). For example, in Figure 1, at least one of the remote servers to which the data was sent (e.g., analytics server 140, analytics server 145, and/or analytics server 150) analyzes the data. Analyzing the data in the remote server involves processing the transmitted dataset(s) to extract meaningful insights and actionable information. This may include applying one or more machine learning algorithms to predict maintenance needs, aggregating data from multiple vehicles to identify trends, or performing diagnostics to detect anomalies in vehicle performance. The analysis may also involve real-time evaluations for critical data, such as safety alerts, or batch processing for periodic uploads, enabling applications like fleet management, inventory optimization, and dynamic insurance adjustments.

The operations of process 500 further include accessing the stored data via an application interface (step 525). In the example of Figure 2, the data may be stored in or by analytics server 235 and then accessed by vehicle diagnostics application 245. In the example of Figure 3, the data may be stored in or by analytics server 235 and then accessed by inventory database system 315. Accessing the stored data via an application interface involves retrieving data that has been processed and stored on one or more remote servers, such as the analytics server or another dedicated database system, through a user-facing application or system interface. Application interfaces may include mobile apps, web dashboards, in-vehicle infotainment systems, or APIs used by third-party software platforms. These interfaces may query the stored data through secure communication protocols, allowing users to view diagnostics, maintenance recommendations, or performance insights, and may also enable real-time interactions, such as sending commands or requesting updates from the vehicle system.

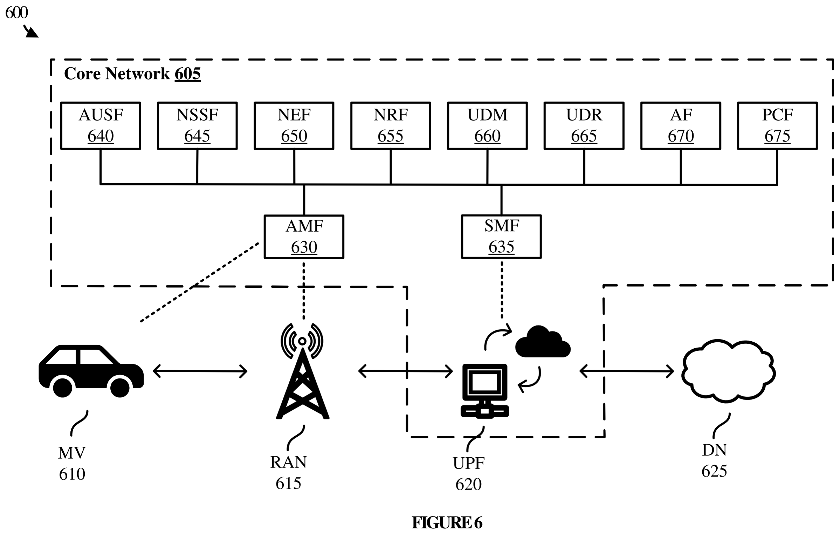

Figure 6 illustrates 5G communication network 600. 5G communication network 600 is representative of a 5G communication network as disclosed herein in which the transmission and access of consolidated vehicle data may be implemented. 5G communication network 600 may be representative of network 115 in Figure 1 and/or the network associated with RAN 230 in Figure 2, in some examples. 5G communication network 600 includes core network 605, motor vehicle (MV) 610, radio access network (RAN) 615, user plane function (UPF) 620, and data network (DN) 625. Core network 605 includes Access and Mobility Management Function (AMF) 630, Session Management Function (SMF) 635, Authentication Server Function (AUSF) 640, Network Slice Selection Function (NSSF) 645, Network Exposure Function (NEF) 650, Network Repository Function (NRF) 655, Unified Data Management (UDM) 660, Unified Data Repository (UDR) 665, Application Function (AF) 670, and Policy Control Function (PCF) 675. In other examples, 5G communication network 600 may include different or additional elements than those illustrated in Figure 6 including but not limited to a session communication proxy (SCP), a migration function, a provisioning orchestrator, a CRM client, and the like.

MV 610, in some examples, is representative of vehicle 105 from the preceding Figures. RAN 615, in some examples, is representative of RAN 230 and/or a portion of network 115 from the preceding Figures. Core network 605, in some examples, is representative of network 115 from the preceding Figures.

AMF 630 is responsible for access and mobility management including the initial registration of devices, authentication, tracking area management, and ensuring that users remain connected as they move through the network. AMF 630 serves as the point of contact for a user device (e.g., MV 610) when it tries to connect to the 5G network (e.g., 5G communication network 600). AMF 630 manages the establishment, maintenance, and termination of the connection between MV 610 and core network 605. SMF 635 is responsible for session management including establishing, modifying, and releasing sessions (which comprise of one or more data flows). SMF 635 also selects and manages the user plane functions, handles aspects of IP address allocation, and maintains the rules for how data should be routed and reported. SMF 635 ensures that data can be successfully transmitted between MV 610 and the internet or other network services.

AUSF 640 is also responsible for aspects of user authentication. AUSF, in part, generates and validates authentication vectors to ensure that the requesting vehicle or device is a legitimate subscriber of 5G communication network 600. Upon successful authentication, AUSF 640 contributes to establishing a secure communication channel between MV 610 and core network 605 by facilitating the generation and distribution of security keys. AUSF 640 may also support network slicing by authenticating access to different network slices based on user subscription. AUSF 640 also supports roaming by interacting with corresponding authentication functions in other networks.

NSSF 645 is responsible for selecting the appropriate network slice for MV 610 based on MV 610's subscription data and requested service. This may involve determining which slice or slices are best suited to meet the specific service requirements and MV 610's subscription profile. NSSF 645 is also responsible for enforcing policies related to network slice access, managing information about the network slices, and interacting with other core network functions to ensure that MV 610 is connected to the correct slice and that slice-specific rules are applied.

NEF 650 plays a role in securely exposing the capabilities of core network 605 to external applications and services. NEF 650 may perform functions such as providing standardized APIs for third-party services to access specific network capabilities or information and ensuring that the exposure of network capabilities and user data is managed securely and user privacy is maintained. NRF 655 acts as a central registry and discovery service for the network functions within core network 605. NRF 655 allows other network functions to register their services and discover the services provided by other network functions, maintains up-to-date information on the services offered by different network functions, supports load balancing and fault tolerance mechanisms within the network, and supports the scalability of the network.

UDM 660 is a central entity for managing subscriber data and authentication information. UDM 660 stores and manages subscription-specific information and is responsible for handling the authentication and authorization of users trying to access the network. Although not directly managing sessions, UDM 660 provides necessary information to other network functions, such as AMF 630 and SMF 635, to assist in session establishment and management based on the subscriber's data. UDM 660 also supports seamless service continuity and roaming by managing user identities and security information across different types of networks.

UDR 665 acts as a database (or multiple databases) for storing and managing structured subscriber data and service information. UDR 665 manages access to subscription data for other network functions such as AMF 630, SMF 635, and UDM 660. AF 670 is representative of external applications and services that may need to interact with core network 605 for various purposes. PCF 675 is responsible for policy management, which involves creating and enforcing policy rules for network behavior and user data transmission.

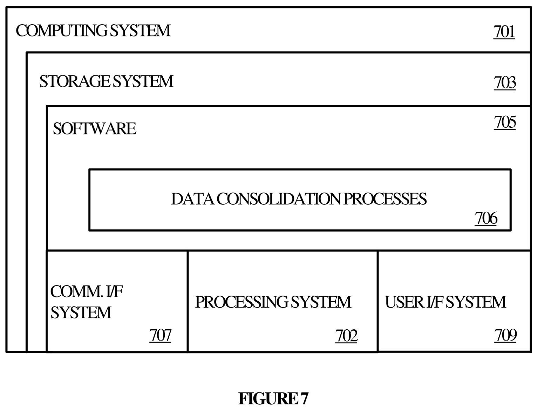

Figure 7 illustrates computing system 701, which is representative of any system or collection of systems in which the various processes, programs, services, and scenarios disclosed herein may be implemented. Examples of computing system 701 include, but are not limited to SDKs, SOCs, vehicle computers, mobile devices, server computers, web servers, cloud computing platforms, and data center equipment, as well as any other type of physical or virtual server machine, container, and any variation or combination thereof. Examples may also include desktop and laptop computers, tablet computers, and wearable devices.

Computing system 701 may be implemented as a single apparatus, system, or device or may be implemented in a distributed manner as multiple apparatuses, systems, or devices. Computing system 701 includes, but is not limited to, processing system 702, storage system 703, software 705, communication interface system 707, and user interface system 709 (optional). Processing system 702 is operatively coupled with storage system 703, communication interface system 707, and user interface system 709.

Processing system 702 loads and executes software 705 from storage system 703. Software 705 includes and implements data consolidation processes 706, which is representative of the various processes for data consolidation, transmission, and analysis as discussed with respect to the preceding Figures, such as process 400 and/or process 500. When executed by processing system 702, software 705 directs processing system 702 to operate as described herein for at least the various processes, operational scenarios, and sequences discussed in the foregoing implementations. Computing system 701 may optionally include additional devices, features, or functionality not discussed for purposes of brevity.

Referring still to Figure 7, processing system 702 may comprise a microprocessor and other circuitry that retrieves and executes software 705 from storage system 703. Processing system 702 may be implemented within a single processing device but may also be distributed across multiple processing devices or sub-systems that cooperate in executing program instructions. Examples of processing system 702 include general purpose central processing units, graphical processing units, application specific processors, and logic devices, as well as any other type of processing device, combinations, or variations thereof.

Storage system 703 may comprise any computer readable storage media readable by processing system 702 and capable of storing software 705. Storage system 703 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 703 may also include computer readable communication media over which at least some of software 705 may be communicated internally or externally. Storage system 703 may be implemented as a single storage device but may also be implemented across multiple storage devices or sub-systems co-located or distributed relative to each other. Storage system 703 may comprise additional elements, such as a controller, capable of communicating with processing system 702 or possibly other systems.

Software 705 (including data consolidation processes 706) may be implemented in program instructions and among other functions may, when executed by processing system 702, direct processing system 702 to operate as described with respect to the various operational scenarios, sequences, and processes illustrated herein. For example, software 705 may include program instructions for monitoring, collecting, consolidating, transmitting, analyzing, and/or storing data as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 705 may include additional processes, programs, or components, such as operating system software, virtualization software, or other application software. Software 705 may also comprise firmware or some other form of machine-readable processing instructions executable by processing system 702.

In general, software 705 may, when loaded into processing system 702 and executed, transform a suitable apparatus, system, or device (of which computing system 701 is representative) overall from a general-purpose computing system into a special-purpose computing system customized to perform the processes described herein. Indeed, encoding software 705 on storage system 703 may transform the physical structure of storage system 703. The specific transformation of the physical structure may depend on various factors in different implementations of this description. Examples of such factors may include, but are not limited to, the technology used to implement the storage media of storage system 703 and whether the computer-storage media are characterized as primary or secondary, etc.

For example, if the computer readable storage media are implemented as semiconductor-based memory, software 705 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 707 may include communication connections and devices that allow for communication with other computing systems (not shown) over communication networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing system 701 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

Although the descriptions provided herein may be in the context of certain radio access technologies, networks, and network topologies, such as 4G LTE or 5G/NR mobile communications, the proposed concepts, schemes, and any variations thereof may be implemented in, for, and by other types of radio access technologies, networks, and network topologies. Such radio access technologies, networks, and network topologies may include, for example and without limitation, Internet-of-Things (IoT), Narrow Band Internet of Things (NB-IoT), vehicle-to-everything (V2X), fixed wireless internet, non-terrestrial networks (NTN), and space-based technologies, such as communications involving low Earth orbit (LEO), medium Earth orbit (MEO), or geostationary orbit (GEO) satellites. Thus, the scope of the disclosure is not limited to the examples described herein.

As will be appreciated by one skilled in the art, aspects of the present technology may be embodied as a system, method, computer program product, or otherwise. Accordingly, aspects of the present technology may take the form of an entirely hardware implementation, an entirely software implementation (including firmware, resident software, micro-code, etc.) or an implementation combining software and hardware aspects that may all generally be referred to herein as a "circuit," "module" or "system." Furthermore, aspects of the present technology may take the form of a computer program product embodied in one or more computer readable medium(s) having computer readable program code embodied thereon.

Indeed, the included descriptions and figures depict specific implementations to teach those skilled in the art how to make and use the best mode. For the purpose of teaching inventive principles, some conventional aspects have been simplified or omitted. Those skilled in the art will appreciate variations from these implementations that fall within the scope of the disclosure. Those skilled in the art will also appreciate that the features described above may be combined in various ways to form multiple implementations. As a result, the technology is not limited to the specific implementations described above, but only by the claims and their equivalents.

The wireless data network circuitry described above comprises computer hardware and software that form special-purpose wireless system circuitry to serve wireless user devices based on policies. The computer hardware comprises processing circuitry like CPUs, DSPs, GPUs, transceivers, bus circuitry, and memory. To form these computer hardware structures, semiconductors like silicon or germanium are positively and negatively doped to form transistors. The doping comprises ions like boron or phosphorus that are embedded within the semiconductor material. The transistors and other electronic structures like capacitors and resistors are arranged and metallically connected within the semiconductor to form devices like logic circuitry and storage registers. The logic circuitry and storage registers are arranged to form larger structures like control units, logic units, and Random-Access Memory (RAM). In turn, the control units, logic units, and RAM are metallically connected to form CPUs, DSPs, GPUs, transceivers, bus circuitry, and memory.

In the computer hardware, the control units drive data between the RAM and the logic units, and the logic units operate on the data. The control units also drive interactions with external memory like flash drives, disk drives, and the like. The computer hardware executes machine-level software to control and move data by driving machine-level inputs like voltages and currents to the control units, logic units, and RAM. The machine-level software is typically compiled from higher-level software programs. The higher-level software programs comprise operating systems, utilities, user applications, and the like. Both the higher-level software programs and their compiled machine-level software are stored in memory and retrieved for compilation and execution. On power-up, the computer hardware automatically executes physically-embedded machine-level software that drives the compilation and execution of the other computer software components which then assert control. Due to this automated execution, the presence of the higher-level software in memory physically changes the structure of the computer hardware machines into special-purpose wireless system circuitry to serve wireless user devices based on policies.

Unless the context clearly requires otherwise, throughout the description and the claims, the words "comprise," "comprising," "such as," and "the like" are to be construed in an inclusive sense, as opposed to an exclusive or exhaustive sense, that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. The word "or," in reference to a list of two or more items, covers all of the following interpretations of the word: any of the items in the list, all of the items in the list, and any combination of the items in the list.

The above description and associated figures teach the best mode of the disclosed technology. The following claims specify the scope of the invention. Note that some aspects of the best mode may not fall within the scope of the invention as specified by the claims. Those skilled in the art will appreciate that the features described above can be combined in various ways to form multiple variations of the disclosed technology. Thus, the invention is not limited to the specific embodiments described above, but only by the following claims and their equivalents. The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having operations, or employ systems having blocks, in a different order, and some processes or blocks may be deleted, moved, added, subdivided, combined, and/or modified to provide alternative or sub-combinations. Each of these processes or blocks may be implemented in a variety of different ways. Also, while processes or blocks are at times shown as being performed in series, these processes or blocks may instead be performed or implemented in parallel or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology is set forth in the appended claims.

## Claims

1. A method comprising:
monitoring communication signals from at least one internal vehicle communication protocol to collect data from a plurality of subsystems of a motor vehicle;
processing the data from the plurality of subsystems to consolidate the data into one or more datasets for transmission to a remote server;
identifying a priority level for each dataset of the one or more datasets based on predefined criteria to determine to transmit at least one dataset of the one or more datasets to the remote server; and
transmitting each of the at least one dataset from the motor vehicle to the remote server via a network slice of multiple network slices of a wireless communication network based at least on the priority level of each of the at least one dataset.

2. The method of claim 1, wherein the data from the plurality of subsystems comprises at least one of the following: sensor readings, diagnostic trouble codes, driver behavior metrics, environmental data, and component usage statistics.

3. The method of claim 1 or 2, wherein the at least one internal vehicle communication protocol comprises at least one of a Controller Area Network Bus, On-Board Diagnostics II, and Unified Diagnostic Services.

4. The method of any preceding claim, further comprising, to determine to transmit the at least one dataset of the one or more datasets to the remote server, comparing each dataset of the one or more datasets to at least one trigger point, the at least one trigger point comprising at least one of a size threshold and an available network connection.

5. The method of any preceding claim, wherein the predefined criteria are configured to assign the priority level for each dataset of the one or more datasets based at least in part on whether data in each dataset is urgent data or non-urgent data.

6. The method of any preceding claim, further comprising selecting the network slice of the wireless communication network over which to transmit each of the at least one dataset.

7. The method of any preceding claim, further comprising receiving feedback from the remote server based on a server-side analysis of the at least one dataset, wherein the feedback includes at least one of the following: a maintenance alert and an operational recommendation.

8. The method of claim 7, wherein the remote server, to perform the server-side analysis, applies one or more machine learning models to the at least one dataset.

9. The method of any preceding claim, further comprising storing at least one non-urgent dataset of the one or more datasets locally within the motor vehicle for future transmission to the remote server.

10. One or more non-transitory computer-readable storage media having program instructions stored thereon, wherein the program instructions, when executed by a computing system, direct the computing system to perform operations, the operations comprising:
monitoring communication signals from at least one internal vehicle communication protocol to collect data from a plurality of subsystems of a motor vehicle;
processing the data from the plurality of subsystems to consolidate the data into one or more datasets for transmission to a remote server;
identifying a priority level for each dataset of the one or more datasets based on predefined criteria to determine to transmit at least one dataset of the one or more datasets to the remote server; and
transmitting each of the at least one dataset from the motor vehicle to the remote server via a network slice of multiple network slices of a wireless communication network based at least on the priority level of each of the at least one dataset.

11. The one or more non-transitory computer-readable storage media of claim 10, wherein the data from the plurality of subsystems comprises at least one of the following: sensor readings, diagnostic trouble codes, driver behavior metrics, environmental data, and component usage statistics.

12. The one or more non-transitory computer-readable storage media of claim 10 or 11, wherein the at least one internal vehicle communication protocol comprises at least one of a Controller Area Network Bus, On-Board Diagnostics II, and Unified Diagnostic Services.

13. The one or more non-transitory computer-readable storage media of any of claims 10 to 12, the operations further comprising, to determine to transmit the at least one dataset of the one or more datasets to the remote server, comparing each dataset of the one or more datasets to at least one trigger point, the at least one trigger point comprising at least one of a size threshold and an available network connection.

14. The one or more non-transitory computer-readable storage media of any of claims 10 to 13, wherein the predefined criteria are configured to assign the priority level for each dataset of the one or more datasets based at least in part on whether data in each dataset is urgent data or non-urgent data.

15. A system comprising:
one or more computer-readable storage media;
a processing system operatively coupled with the one or more computer-readable storage media; and
program instructions stored on the one or more computer-readable storage media, wherein the program instructions, when read and executed by the processing system, direct the processing system to at least:
monitor communication signals from at least one internal vehicle communication protocol to collect data from a plurality of subsystems of a motor vehicle;
process the data from the plurality of subsystems to consolidate the data into one or more datasets for transmission to a remote server;
identify a priority level for each dataset of the one or more datasets based on predefined criteria to determine to transmit at least one dataset of the one or more datasets to the remote server; and
transmit each of the at least one dataset from the motor vehicle to the remote server via a network slice of multiple network slices of a wireless communication network based at least on the priority level of each of the at least one dataset.
